# EUROPEAN PATENT APPLICATION

(11) **EP 2 947 633 A1**
(43) Date of publication of application: **25.11.2015**
(21) Application number: 14169125.3
(22) Date of filing: 20.05.2014
(51) Int. Cl.: G07F 19/00, G06Q 20/40, G07C 9/00

(54) **Automatic teller system for providing a banking service to a user operating the system, and method therefore**

(71) Applicant: ING Groep N.V., 1102 MG Amsterdam (NL)
(72) Inventor: Dondi, Daniele, 1102 MG Amsterdam (NL); van Gastere, Andreas Gerardus, 1102 MG Amsterdam (NL); Bonebakker, Jan Lodewijk, 1102 MG Amsterdam (NL); Stoichitoiu, Bogdan Alexandru, 1102 MG Amsterdam (NL)
(74) Representative: V.O.

(57) **Abstract**

The invention is directed at an automatic teller system for providing at least one banking service to a user operating the system, the system comprising an identification assembly for identifying the user, a user interface assembly for interacting with the user, a data communication module for communicating with a banking server, and a control module, wherein the control module is configured to cooperate with the identification assembly for identification of the user, and wherein the control module is configured to cooperate with the data communication module and with the user interface assembly such as to, dependent on a result of the identification, exchange data with the user and with the banking server for providing the banking service to the user, wherein the identification assembly comprises an identity certificate scanner for receiving picture bearing identity certificate, wherein the identity certificate scanner is configured to authenticate the picture bearing identity certificate and to scan at least a picture included thereon, and wherein the identification assembly further comprises a camera for obtaining an image of the user, and wherein the control module is configured to compare the image with the picture to identify the user by the picture.

## Description

### Field of the invention

The present invention is directed at an automatic teller system for providing at least one banking service to a user operating the system, the system comprising an identification assembly for identifying the user, a user interface assembly for interacting with the user, a data communication module for communicating with a banking server, and a control module, wherein the control module is configured to cooperate with the identification assembly for identification of the user, and wherein the control module is configured to cooperate with the data communication module and with the user interface assembly such as to, dependent on a result of the identification, exchange data with the user and with the banking server for providing the banking service to the user. The invention is further directed at a method of operating such as an automatic teller system.

### Background

Over the past decennia, the provisioning of banking services to customers has evolved considerably. Whereas in early days, clients had to personally visit a bank office to perform any kind of service, nowadays most regular services offered by banks may be accessed online or via automatic teller machines. Clients nowadays hardly ever have to visit a bank office, rendering it less and less attractive for banks to maintain offices everywhere. On the other hand, this also makes it more difficult to provide those services for which personal contact is considered required.

Bank offices presently focus on providing advanced customer support, enabling those services for which personal contact is essential. Such services may for example include providing personal advice regarding personal loans or mortgages, or providing advice to professional customers regarding investments. Such services rely on trust and therefore require personal contact between the bank and the client. Other services that still require personal contact with a client are services that require extended security; those situations where an employee of the bank must see the client in order to ensure a sufficient level of security for providing the services. Such services for example include the opening of a bank account for a new client.

Although each client will understand that the desired level of security demands from him or her to follow a specific process and perform a number of actions, including paying a personal visit to the bank, the necessity thereof for providing such services may still be experienced as cumbersome. This increases the rate of failure of providing such services for all kinds of reasons, e.g. because the visit is postponed, because certain steps are forgotten or must be repeated unnecessarily, or because the service is simply ignored by the client despite it being beneficial to him. Therefore, a continuous effort is made by banks to optimize services and to reduce the time required to provide them, for enhancing the customer experience.

### Summary of the invention

It is an object of the present invention to obviate the abovementioned disadvantages and to provide an automatic teller system that allows to provide the more advanced banking services.

To this end, according to one aspect, there is provided herewith an automatic teller system for providing at least one banking service to a user operating the system. The system comprises an identification assembly for identifying the user, a user interface assembly for interacting with the user, a data communication module for communicating with a banking server, and a control module. The control module is configured to cooperate with the identification assembly for identification of the user. The control module is further configured to cooperate with the data communication module and with the user interface assembly such as to, dependent on a result of the identification, exchange data with the user and with the banking server for providing the banking service to the user.

The identification assembly may comprise an identity certificate scanner for receiving picture bearing identity certificate. The identity certificate scanner may be configured to authenticate the picture bearing identity certificate and to scan at least a picture included thereon. The identification assembly may further comprise a camera for obtaining an image of the user, and the control module may be configured to compare the image with the picture to identify the user by the picture. The automatic teller system may, in accordance with an embodiment, comprise a smart card creator component for creating and issuing a personal banking card to the user dependent on said data exchange.

The present invention provides for a fully automated self-service kiosk where customers can execute all kinds of advanced banking activities, like opening of a bank account, contacting call center via a video connection, checking status of financial products, applying for new specific financial services (loans, mortgages, insurances). The present invention makes use of an identity certificate scanner that receives a picture bearing identity certificate. The identity certificate scanner enables to authenticate the identity certificate received, and is equipped with an imaging module for acquiring or digitizing the picture which is present on the picture bearing identity certificate. In addition, the identification assembly further comprises a camera, or cooperates with a camera included in the automatic teller system, for obtaining an image of the user in front of the system. The image of the user is then compared with the picture obtained via the scanner. An image analysis algorithm is used to compare the image of the user with the picture on the identity certificate, and to identify the user in front of the automatic teller system based on the picture obtained from the identity certificate. For example, the image analysis algorithm may compare the presence of certain similarities or features in the image or picture, and compare these such as to establish a positive (or negative) identification by means of the picture. Moreover, the picture bearing identity certificate is also analyzed by the identity certificate scanner for authenticating the certificate. Various methods may be applied for authenticating the certificate, which may require the analysis of features of the certificate itself, or the verification of the correctness of information presented on the certificate. Such a verification may for example be implemented by querying or acquiring data from an external database using the data communication module.

By performing the authentication of the identity certificate and combining it with a comparison between the picture on the certificate and an image taken from the user, a high level of security is provided that may be used for providing advanced banking services that are normally only provided through personal contact with an employee at a banking office. This personal intervention by a banking employee can therefore be made obsolete for providing such services, which in itself adds to the level of security as well as to the ease of use of the service to the client.

The automatic teller system may, in accordance with a preferred embodiment, comprise a smart card creator component for creating and issuing a personal banking card to the user dependent on said data exchange. This allows to provide the service of opening a bank account and to immediately create a bank card to the new client / account holder ready to use.

In accordance with yet another specific embodiment of the present invention, the control module is configured to perform the comparing of the image with the picture either continuously, or one or more of times during said providing of the banking service, and to pause, terminate or cancel the providing of the banking service upon detecting that a positive identification of the user by said comparing is no longer possible. This embodiment helps to prevent fraud by continuously or at least periodically during provisioning of the banking service performing the identification such as to ensure that the user in front of the automatic teller system which has been positively identified has not been replaced by a different person. As will be appreciated, it is possible to compare the image with the picture continuously or periodically, and alternatively, or additionally, it is also possible to compare the image taken using the camera with earlier versions of the image. For example, it may simply be detected whether the image taken at a certain moment during provisioning of the banking service still represents the same user as the image that was taken initially to identify the user prior to providing the banking service. It is also possible to compare the image taken by the camera at any moment with the picture on the picture bearing identity certificate, such as to redo the identification continuously or multiple times.

In accordance with a further embodiment of the present invention, the identity certificate scanner further comprises a data capture module for capturing user data from the picture bearing identity certificate, and wherein the control module is configured to cooperate with the data capture module to receive the captured user data for exchanging the user data with the banking server for providing the banking service. The data which is present on the identity certificate may well be used directly for providing the banking service. Such data may for example be exchanged with the banking server, and increases the ease of use to the user by obviating the necessity to input some of the data manually. For example, the user's name and social security number may be retrieved from the identity certificate directly, preventing error in the user input. As will be appreciated, where necessary or desired, the user may be allowed to modify or add data to the data acquired from the identity certificate.

In a specific version of the above embodiment, the data capture module comprises at least one of: a chip reader for obtaining data stored in a chip included by the picture bearing identity certificate, a character recognition module, or an optical code reader such as a bar code reader or a quick response - QR - code reader. The data capture module is not limited to any of these components, and may additionally comprise other components that allow to obtain additional data from the identity certificate.

In accordance with yet a further version of the above embodiments, the smart card creator component is configured to receive at least part of the captured user data, and wherein the smart card creator component comprises at least one of: a card printer for printing at least part of the captured user data on the personal banking card, or a card encoder for storing at least part of the captured user data on a chip included by the personal banking card. In general within the system in accordance with the present invention, the smart card creator component (whether or not a data capture module is also included in the system) may comprise anyone or more of a card printer or card encoder as described above. By including such components in the smart card creator component, any data acquired from the banking server or through a data capture module from the identity certificate may be imprinted on or encoded in the smart card to be provided to the user.

In accordance with yet a further embodiment of the present invention, the control module of the system is arranged for receiving from the banking server through the data communication module a service delivery proposal to be accepted or rejected by the user, and wherein the control module is configured to cooperate with the user interface assembly for receiving user input for accepting or rejecting the service delivery proposal, wherein the user interface assembly comprises at least one of a signature pad, a touch screen or a touch pad for capturing a signature from the user. The signature pad included by the system in accordance with this embodiment enables to legally accept a service delivery proposal. Such a service delivery proposal may for example include a legal document to be signed by the user for acceptance of a service. The service delivery proposal may for example be obtained from the banking server through the data communications module in response to a service request provided by the user through the user interface assembly (e.g. through a touch screen, keyboard, mouse, or other input means).

In accordance with yet another embodiment of the present invention, the user interfaces assembly further comprises a display screen, and wherein the control module is configured to generate and display a unique identifier pattern, such as a quick response - QR - code or bar code, on the display screen dependent on said identification. The system in accordance with this particular embodiment provides the additional advantage that the system can be used in providing additional security in the process of providing electronic services such as mobile banking, i.e. performing regular banking services via a mobile application on a smartphone or tablet type computer. For example, where a customer may have installed a mobile banking app on his or her smartphone, the app may be activated through an automatic teller machine in accordance with the present invention. In that case, the user may identify him or herself via the automatic teller machine, and selects the option of activating the mobile app. After a positive identification by the automatic teller machine, and after receiving the user selection, the automatic teller machine may for example in return generate a quick response code (QR code) and display the QR code on screen. The user, using his smartphone, may take an image of the displayed QR code for use by the installed app, such as to activate the app on the smartphone. This prevents unauthorized persons to get access to someone's bank account illegally via a mobile banking app, providing an additional level of security.

In accordance with a further embodiment of the present invention, the data communication module further includes a wireless communication module, and wherein the control module upon is further arranged to receive an electronic confirmation from a mobile communication device of the user in response to the displaying of the unique identifier pattern on the display screen. The unique identifier pattern (such as the QR code) displayed on screen may in that case be followed by the smartphone by sending a message over the wireless signal to the automatic teller machine such as to acknowledge receipt thereof. In return, this can be followed by a confirmation of the activation of the mobile app via for example an email to the user. The user is thereby acknowledged of the activation of the mobile application app via a different channel, further preventing unauthorized use of the mobile application app. Alternatively or additionally, a confirmation may be provided by the mobile communication device to a banking server, which may provide it to the automatic teller machine.

In accordance with yet another embodiment, the system is configured to provide the banking service of opening a new bank account for the user and wherein the service delivery proposal includes bank account data of the new bank account, and wherein the control module instructs the smart card creator component to create and issue the personal banking card in response to receiving said user input representing an acceptance by the user of the service delivery proposal. The automatic teller system of the present invention may particularly and advantageously be used to provide the service of opening new bank accounts to new customers. This service conventionally is only provided through personal contact by the customer paying a visit to the bank in person or through derived authentication by the customer with an already authorized bank account.

In accordance with yet another embodiment, provide a direct connection to a bank service center using a video-link. In such an embodiment, the data communication module may further be configured to establish a streaming data connection to a service center server, wherein the control module is arranged for instructing the identification module to provide streaming data representing an audiovisual signal of the user to the service center server, and wherein the control module is arranged for instructing the display module to display an audiovisual stream received from the service center server. The control module may instruct the identification module to provide the audiovisual signal from an audio stream taken from a microphone of the system and a video stream of the user as received from the camera. The control module may instruct the display module to display an audiovisual stream received from the server at the bank service center, such as to enable direct support via the bidirectional audiovisual link from a customer care representative at the bank service center. One skilled in the art can easily extend this utility to provide other services where a live audio and video link are beneficial to the connection between a user and the bank service center.

In accordance with a second aspect of the present invention there is provided a banking service using an automatic teller system to a user operating the system, wherein the system comprises an identification assembly for identifying the user, a user interface assembly for interacting with the user, a data communication module for communicating with a banking server, and a control module, wherein the method comprises the steps of: the control module cooperating with the identification assembly for identifying the user; dependent on a result of the identification, the control module cooperating with the data communication module and with the user interface assembly for exchanging data with the user and with the banking server for providing the banking service to the user; receiving a picture bearing identity certificate by an identity certificate scanner included by the identification assembly, authenticate the picture bearing identity certificate using the an identity certificate scanner, and scan at least a picture included on the picture bearing identity certificate; using a camera included by the identification assembly for obtaining a live image of the user; compare the image with the picture using the control module to identify the user by the picture; and create and issue a personal banking card to the user dependent on said exchanging of data by a smart card creator component of said automatic teller system.

In accordance with a third aspect of the present invention there is provided a computer program product comprising computer executable code for performing a method in accordance with the second aspect when executed on an automatic teller machine comprising an identification assembly for identifying the user, a user interface assembly for interacting with the user, a data communication module for communicating with a banking server, and a control module.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 illustrates an automatic teller apparatus in accordance with the present invention;
Figure 2 schematically illustrates an automatic teller system in accordance with an embodiment of the present invention;
Figure 3 schematically illustrates a computer program architecture for use in an embodiment of the present invention;
Figure 4a and 4b schematically illustrate a method for opening a new bank account using a system in accordance with an embodiment of the present invention;
Figures 5a-5c illustrate various embodiments of methods for providing a service using a system in accordance with a method of the present invention;
Figure 6 schematically illustrates a method for activating a mobile banking application using an automatic teller system in accordance with an embodiment of the present invention.

### Detailed description

The present invention provides an automatic teller system, for example in the form of a fully automated self-service kiosk where customers can execute multiple banking activities, like contacting call center via a video connection, checking status of financial products, applying for new specific financial services (loans, mortgages, insurances). The system is particularly useful in the process of opening bank accounts, e.g. for a new (unknown) customer, but may be applied for providing any banking service for which normally the assistance of a bank employee would have been required to provide the desired level of security. A main use case being a prospect approaching the automatic teller machine located in a branch or in selected shopping center and deciding to open a bank account. Full "Know Your Customer" (KYC) activities are executed automatically and the customer walks away with a new active bank account, including a personalized debit card that can be used immediately.

The main benefit of the present invention is to allow clients and prospects to take advanced banking services, such as to open a bank or savings account, to close a mortgage, or to empower a delegate for his account, via the automatic teller machine. The entire process can be completed in an easy way, and the services can thus be made available in multiple locations; not only bank office branches. The automatic teller machine (i.e. self-service kiosk) can be positioned in strategic locations, like shopping centers, universities, events, railway stations, airports, and other public places.

This is an important advantage for areas where the number of local branches of a bank is limited. However, even in areas having an extensive branch distribution, i.e. many local branches, the automatic teller system of the present invention could help minimize operational cost, since less employees will be needed in such branches, or, the quality of the customer interaction with the employees is improved since they have more time for each customer, since routine operations are diverted to the automatic teller system. This is achieved without jeopardizing and even increasing the level of security, realizing that a bank employee can be misled or put under pressure while the system of the present invention cannot. The system of the present invention can be placed quickly and easily in a strategically chosen location, e.g. to establish multiple opportunities to engage customers and prospects alike. The system can be placed at an event and can be removed after the event, thus providing full service portable 'banking office'.

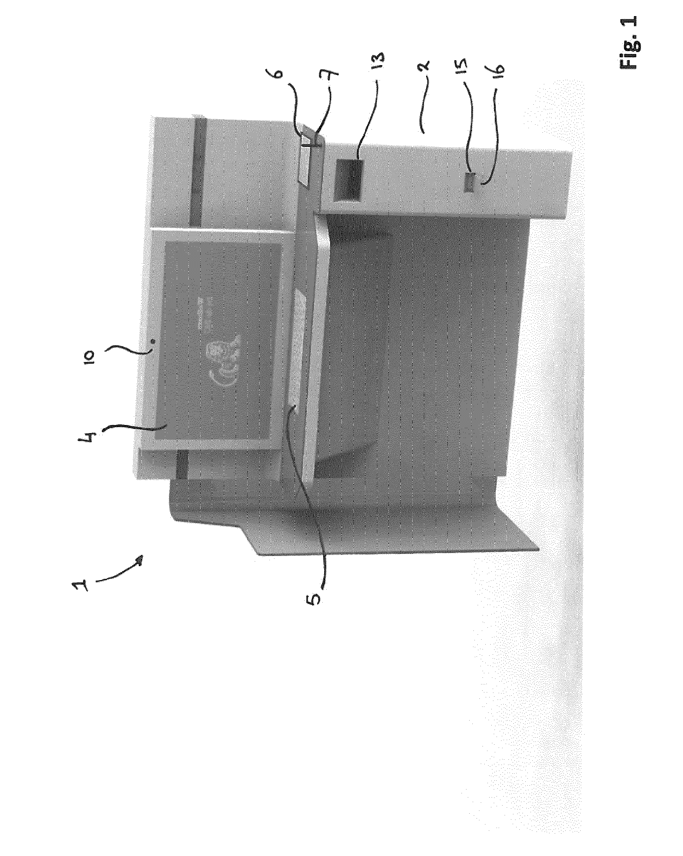

Figure 1 schematically illustrates an automatic teller apparatus or service kiosk 1 in accordance with an embodiment of the present invention. Most modules and parts of the apparatus 1 are located inside the housing 2 of the apparatus 1. The apparatus 1 comprises a number of input output components for enabling interaction with a user. For user interaction, the apparatus 1 for example comprises a (touch)screen 4, a keyboard 5, a signature pad 6 including a stylus 7. Information to be provided to a user may be displayed on the screen 4, and the user may input information manually to the system 1 via the keyboard 5. Moreover, in case a signature is to be provided, e.g. for signing a contract, the user may use signature pad 6 providing his signature with stylus 7. Alternatively, instead of the signature pad 6, the signature may also be provided to the system 1 via the touch screen 4. In that case, the separate signature pad 6 may not be necessary to include in the apparatus 1.

The apparatus 1 further comprises an identity certificate scanner 13. The identity certificate scanner 13 is arranged for receiving therein a picture bearing identity certificate, i.e. a regular identity certificate wherein at least a picture of the user is present. This may for example be a passport, or driver's license, or other identity card bearing a picture of the user. Inside the housing 2, the apparatus 1 further comprises a smart card printer/ encoder 21 (not visible in figure 1) which enables to provide a personal banking card or smart card 16 via its output 15 to a user. To operate the apparatus 1, a user may sit or stand in front of the apparatus 1 and provide his signature bearing identity certificate to the identity certificate scanner 13 for the system to scan the certificate. Information throughout the process may be provided to the user via screen 4, and input may further be provided via the touchscreen 4, the keyboard 5 or the signature pad 6 and stylus 7.

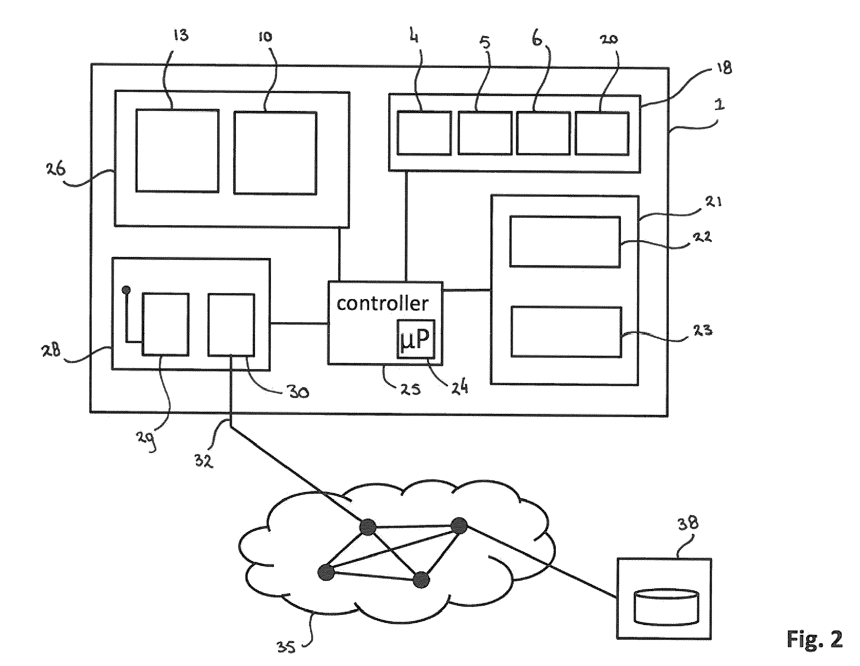

Figure 2 schematically illustrates the apparatus 1 of figure 1. In figure 2, the different components and modules of the apparatus 1 have been schematically illustrated. The apparatus 1 for example comprises a user interface assembly 18. The user interface assembly as used herein is the collection of all modules and components that enable user interaction with a user of the system. The user interface assembly 18 for example comprises the touch screen 4, the keyboard 5 and the signature pad 6. The user interface assembly 18 may further comprise other input/output means, such as for example a voice recognition module 20.

The heart of the apparatus is the controller module 25. The control module 25 may be a dedicated computer arranged for performing the steps and interactions described herein within the apparatus 1. For example, the controller module 25 may be a laptop computer which is integrated in the housing 2 of the apparatus 1. Instead of a laptop or other computer, the system may be provided with it's own integrated motherboard or printed circuit board (PCB) with microcontroller. The controller module 25 comprises a processor 24.

The apparatus 1 further comprises an identification assembly 26. The identification assembly 26 for example comprises the identity certificate scanner 13 and the camera 10. It is to be noted here that whether or not either one of the scanner 13 or the camera 10 is part of the identification assembly 26 may merely be a matter of definition in a sense that the scanner 13 and camera 10 may also be regarded as regular input/output components that may be part of user interface assembly 18. In the present description, the scanner 13 and camera 10, in accordance with the present definition, are part of the identification assembly 26. The identification assembly 26 may comprise additional components that may help to further enhance the level of security, or the identification capabilities of the apparatus 1. For example, if desired by the skilled person, the identification assembly 26 may further comprise a fingerprint reader, an iris scanner, a chip card reader, or the like, without departing from the present invention.

The apparatus 1 further includes a data communication module 28. The data communication module 28 comprises a wireline communication component 30 and a wireless communication component 29. The wireline communication component 30 may be connected to a data communication network 35 via output port 32. Output port 32 may be a standard UTP port for connecting to the Internet or to a different network. Via network 35, apparatus 1 is able to communicate with banking server 38. A skilled person can easily replace the wireline communication component by a wireless component if so desired, the purpose of the communication component being unchanged.

Apparatus 1 further comprises a smartcard creator component 21. The smart card creator component 21 may for example include a smart card printer 22 and a smart card encoder 23. These components may be integrated into a single creator module 21. The smart card printer component 22 enables to print information on an unwritten smart card, and physically provide a smart card for use by the user. The smart card encoder 23 enables to write smart card data to a data chip included on the smart card to be provided to the user.

As may be appreciated the card creator component 21 and/or smart card encoder 23 are optional to the apparatus. Alternative embodiments may not need to create the card 'on the spot', but operation could be based for example on associating pre-written cards. In that case, the pre-written cards may be located in a container unit, or the like, inside the apparatus from where these are issued to the user. Upon issuing, the pre-written card being issued can be associated with the user. The association may for example be registered through banking server 38, even without the need to write anything directly on the smart card locally. In other embodiments, however, some additional data may be stored on associated pre-written smart cards upon issuing these to a user.

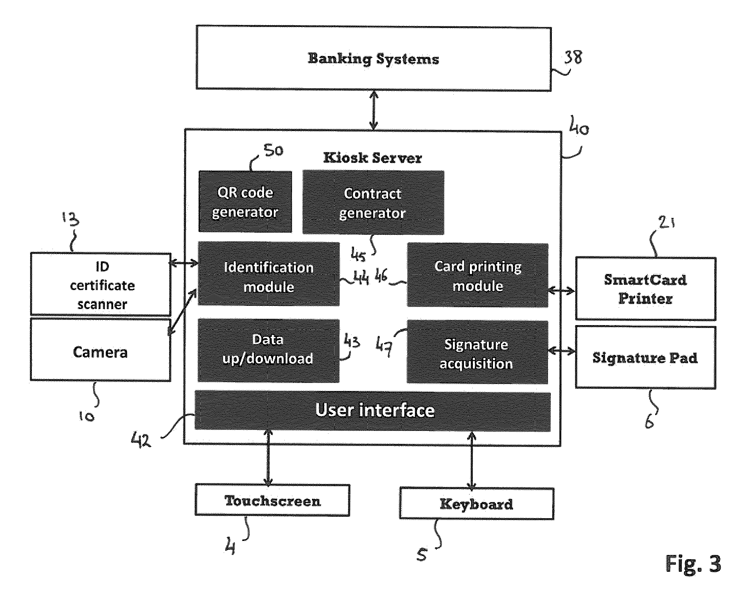

Turning to figure 3, there is provided a schematic illustration of some of the software components included in a computer program product 40 that may be used for controlling operation of the apparatus 1. The computer program 40 requires these software routines or software modules such as to enable interaction with the banking system 38, the identity certificate scanner 13, the camera 10, the touch screen 4, the keyboard 5, the signature pad 6, and/or the smart card printer or smart card creator 21. To this end, the computer program product 40 comprises a user interface 42 that enables to acquire and provide data via the touchscreen 4 and the keyboard 5, from and to a user. A special signature acquisition module 47 more or less also is part of the user interface module, or can be seen as an extension thereof. The signature acquisition module allows to digitize and acquire a signature which is placed by the user on the signature pad, e.g. using a stylus 7.

The software further comprises a data up/and download module 43 which allows to exchange data via a data network, or directly with a banking system 38, connected thereto.

The software 40 further comprises an identification module 44. The identification module 44 is arranged for obtaining data from the identity certificate scanner 13. For example, the identification module 44 may be arranged for receiving a picture of the user, as is present on a picture bearing identity certificate provide to the scanner 13. Moreover, the identification scanner 13 may comprise optical character recognition software, and may therefore provide the identification module 44 with other information that can be directly read from an identification certificate provided by the user to the scanner 13. In case the identification certificate comprises a data chip, the identification certificate scanner 13 may further be provided with a data chip reader for obtaining such information from the identity certificate. Some of the functionalities mentioned herewith are optional. However, in accordance with the present invention the scanner 13 enables to provide a digitized picture to the identification module 44 taken from the picture bearing identity certificate. Moreover, the identity certificate scanner cooperates with the identification module to allow authentication of the identity certificate present on the scanner. The identification module 44 further cooperates with camera 10 such as to obtain an image from the user in front of the camera 10.

The software 40 further includes contract generator 45 which allows to generate a contract for service provisioning, or a service provisioning proposal, to a user of the system. Such a contract may be assembled by the contract generator 45 using the information from a banking system 38. It is also possible that the apparatus 1 comprises a data memory (or is connected to a remote data repository) wherein a number of standard contracts are already available to the contract generator. In that case, the contract generator may simply fill in the data required to personalize the contract for the user.

The software 40 further comprises a quick response code (QR code) generator 50. This optional QR code generator module 50 for example enables to use the automatic teller system 1 of the present invention for various purposes, such as activation of a mobile banking application on a smart phone or user, as will be explained further below.

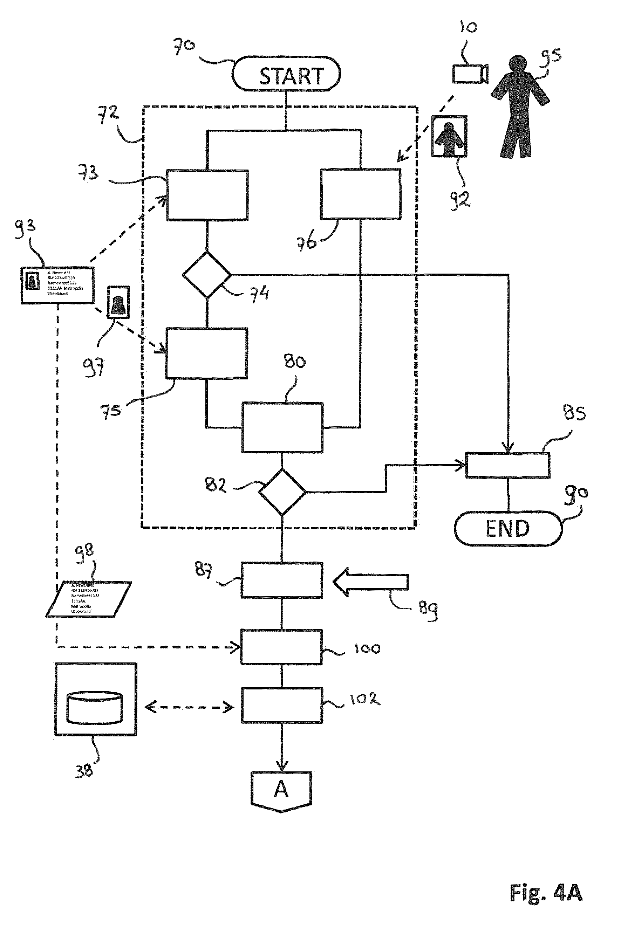

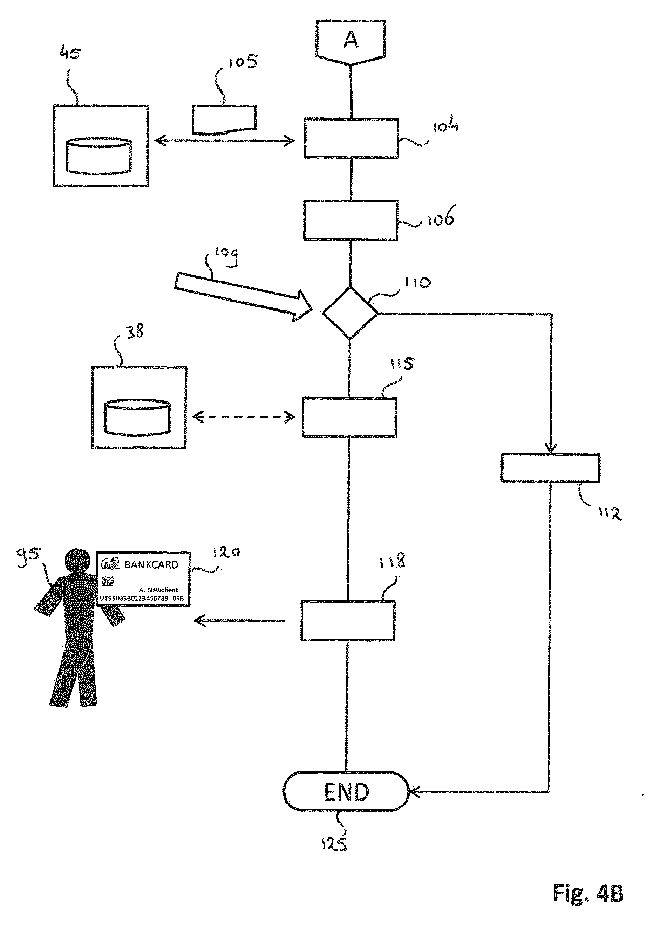

An example service provisioning method that may be provided by an apparatus 1 in accordance with the present invention is illustrated in figures 4a and 4b. The method in figures 4a and 4b represents the opening of a bank account to a new client, i.e. a client that is not an existing relation of the bank. The method starts at 70. A user 95 has taken place in front of the system 1, visible to camera 10. The user 95 has placed his picture bearing identity certificate 93 on the identity certificate scanner 13 of the apparatus 1. In step 72, the identification process for the user 95 is performed first.

In step 72, in particular substep 73 thereof, the picture bearing identity certificate 93 is first authenticated by the system 1. There are various possibilities for authenticating the identity certificate 93 on the scanner. For example, the identity certificate may be checked for specific security features such as holograms, markings, stored data, checksums or codes, or hidden features. Alternatively, or additionally, information on the identity certificate 93 may be verified by querying a security database. For example, information from the identity certificate 93 may be sent in a query to a central server or system, which confirms or denies the authenticity of the certificate 93. In step 74, it is established whether or not the certificate 93 is an authentic identity certificate. In case the authenticity is denied, the method jumps to step 85 wherein the process is cancelled or terminated, ending the process in step 90. In case authenticity of the certificate 93 is confirmed, the identification method continues in step 75. In step 75, the picture 97 of the picture bearing identity certificate 93 is digitized and acquired by the system 1, or may be downloaded from the information storage unit (chip) on the identity certificate. Simultaneous to steps 73, 74 and 75, in step 76 an image 92 of the user 95 is acquired by the system 1 using camera 10.

In step 80 the picture 97 from the picture bearing identity certificate 93 is compared with the image 92 acquired via the camera 10. In step 82 it is established whether the user 95 imaged in image 92 is indeed the same person as the person on the picture 97 of the picture bearing identity certificate 93. In case it is established in step 82 that user 95 is not the same person as illustrated on picture 97, again the process is terminated in step 85. However, in case it is established that user 95 visualized in image 92 is indeed the person in the picture 97 on the picture bearing identity certificate 93, a positive identification is established in step 82, and the method may continue with service provisioning in step 87 and further. For comparing the image 92 with the picture 97 in step 80, a various image analysis algorithms and comparison algorithms may be applied. As will be appreciated, the image 92 may be analyzed for specific characteristics that may also be present in the picture 97 for establishing a positive identification. Advanced image analysis algorithms are known to the skilled person, which allow to compare the user in the image with the person in the picture. These algorithms are not further described herein.

In step 87, user input 89 is requested for various purposes. For example, the user may select a specific service to be provided, in the present example the user 95 selects to open a new bank account. Other information may be acquired from the user 95 by user input 89 to be used by the system 1.

In step 100, the system 1 may optionally acquire personal data 98 from the identity certificate 93 for use by the system. For example, in case the system in step 100 acquires the name and address of user 95 as mentioned on the identity certificate, the system 100 may already suggest this information to be confirmed by the user (in which case the user does not have to enter the information himself, but only has to correct it in case it is no longer valid). Alternatively, the system may be arranged to rely completely on the information obtained from the identity certificate 93, without providing an opportunity to the user to modify or correct the data. In other embodiments, the system may be arranged to verify or complete the information via the communication network, e.g. based on a social security number obtained from the identity certificate. These suggested implementations are optional and may be dependent on the circumstances, the requirements or specifications desired, and/or the local or national legal situation there where the system 1 is to be installed.

In step 102, data communication with the bank server 38 is performed such as to establish the opening of a new bank account and acquire for example an account number and other relevant data. In step 104 (in figure 4b) all the information acquired from the user 95, the identity certificate 93 and the banking server 38 may be assembled into a contract or service provisioning proposal 105 using contract generator 45. Contract generator 45 may be a software module of the apparatus 1, as illustrated in figure 3, but it is also possible that the contract generator 45 is embodied in a separate server or computer, which may for example be an integral part of the banking server 38. In order not to obscure the present description, reference numeral 45 indicate the contract generator functionality (as embodied in a computer program module or server or any other means) separate from a banking server 38.

In step 106, the service provisioning proposal 105 is displayed on screen to the user 95 enabling the user 95 to either accept or reject the proposal. Acceptance or rejection is schematically illustrated in decision step 110. User input 109 represents the user's response to either accept or reject the proposal. Accepting the proposal may for example be achieved by the user inputting his autograph via the signature pad 6 into the system 1. The retrieval of the user's signature via the signature pad 6 may also be a separate step, wherein the acceptance or rejection 109 of the service proposal may simply be the input from a button from either the keyboard 5 or the touch screen 4. In case the service provisioning proposal 105 is rejected by the user 95, the method is terminated in step 112, and all the acquired user data and reserved bank account number and other details are deleted from the memory of the apparatus 1, after which the method ends in step 125. In case the service provisioning proposal 105 is accepted by the user, the confirmation and reservation is made permanent in step 115 through communication with the banking server 138, and a confirmation is received in return by the apparatus 1. Then in step 118, the apparatus 1 instructs the smart card creator module to create a new bank card 120 for the user 95. Any information to be included on the bank card 120 or to be encoded in the chip of the smart card, is provided by the apparatus 1 to the smart card creator component 21. In case, for any reason, the printing of the bank card or smart card fails (e.g. the apparatus is out of empty smart cards or the smart card printer is broken), the whole process illustrated in figure 4b may still be terminated unsuccessfully (this is however not illustrated in figure 4b), in which case again all the personal details and other data may be deleted from the apparatus 1 in order to guarantee the privacy of the user 95. Alternatively, the user may be given the option of terminating the procedure and deleting all personal data, or proceeding with service provisioning in different manner (e.g. by sending a message to the banking system for issuing the card by regular conventional mail correspondence). If the issuing of bank card 120 to user 95 is successful, the method ends in step 125 making the apparatus available to a further user.

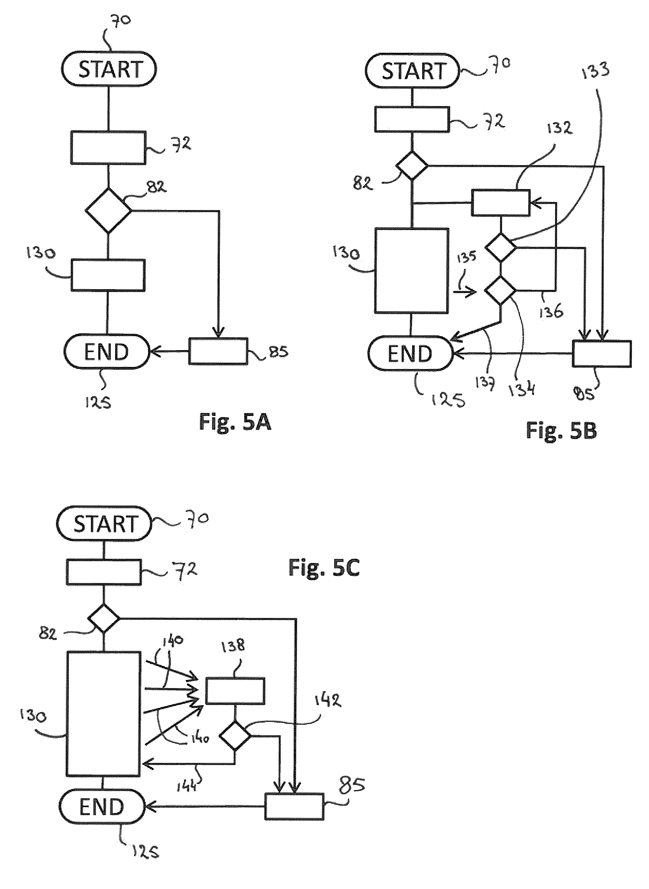

In the method of figure 4a and 4b, it has been assumed that identification of the user is performed once at the start of the method. However, in other implementations, identification of the user in front of the apparatus is performed continuously or periodically throughout the service provisioning, in order to further increase the level of security. This for example enables to prevent fraud by replacing the user by a different person during the service provisioning process. Various possible implementations thereof are schematically illustrated in figures 5a through 5c. Figure 5a more or less illustrates the same situation as in figures 4a and 4b. in figure 5a, the method starts at 70, and identification is performed in step 72. A decision is made in step 82 to establish either a positive or negative identification of the user that uses the system 1. In case a positive identification is obtained in step 82, service provisioning may continue in step 130. After providing the service, the method ends in step 125. However, in case in step 82 a negative identification of the user is established, i.e. the user uses a stolen identity certificate, or for some reason the identity of the user cannot be established, the method is terminated in step 85. It may alternatively be possible to store a picture in case of negative match, in order to make sure that if the same user will go to a branch with a fake or stolen ID it will be possible to identify him or her.

In figure 5b, an alternative to the method of 5a is illustrated which is much more secure in preventing fraud and misuse of the apparatus 1. Again the method starts at step 70, and in step 72 identification is performed first by comparing the picture taken from the picture bearing identity card with an image of the user obtained from camera 10. In step 82 a positive or negative identification is established. A negative identification leads to termination of the method in step 85, similar as in the method of figure 5a. However in figure 5b, simultaneous to the service provisioning 130, identification of the user in front of the apparatus is performed continuously in the background. This is illustrated by steps 132, 133 and 134 in figure 5b. In step 132, images taken from the camera 10 are continuously compared to the picture which is digitized from the picture bearing identity certificate 93. Continuously, in step 133 it is established whether or not a positive identification of the user may be maintained. In case a positive identification is no longer possible (e.g. the person behind the apparatus has been replaced by a different person), the method is terminated prematurely in step 85. However, in case a positive identification can be maintained, as established in step 133, the method continues in step 134. In step 134, it is established whether the identification process running simultaneously to the service provisioning 130 in the background has received a trigger signal 135 indicating that the service provisioning 130 is complete. Where the trigger signal 135 has not yet been received, the continuous identification method in the background loops back to step 132 again comparing the image from camera 10 with the picture from the identity card. In case the trigger signal 135 has been received in step 134, the continuous identification method in the background is terminated as indicated by arrow 137.

In figure 5c yet a further alternative to the permanent identification is illustrated. In the method of figure 5c, the simultaneous identification process performed during the service provisioning 130 is not a continuous background process, but is implemented as a sequence of periodic steps called upon by the main process 130. In the method of figure 5c, after comparing the user image with the picture in step 72 and establishing a positive identity 82, service provisioning 130 is started. Throughout the service provisioning process, every so often, a trigger 140 is sent by the main process 130 to be received by the control module 25. The trigger 140 calls a quick simultaneous identification procedure 138 that momentarily compares the image of the user with a picture on the identity certificate. In step 142, a negative identification will prematurely terminate the process in step 85. However, if it is established that a positive identification can be maintained, a confirmation is provided as illustrated by arrow 144 to the main process 130, and the process 130 can be continued. The method ends in step 125.

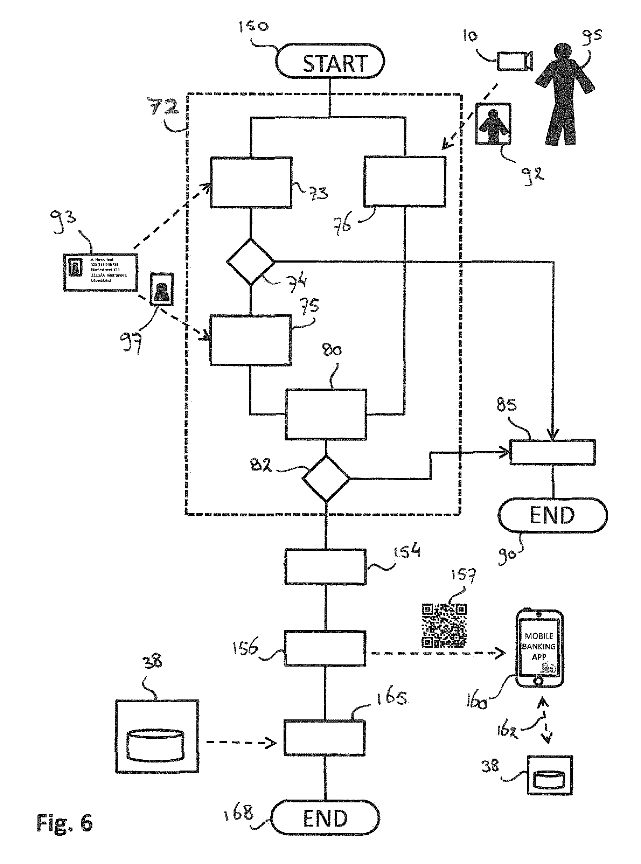

A further advantageous service provisioning method that can be provided through the automatic teller system 1 of the present invention is illustrated in figure 6. The method starts at step 150. Identification in step 72 is identical to the identification steps of figure 4a and 4b (steps 72-90) and is not further described here. The service provisioning itself, after positive identification in step 82, consists of the generation of a quick response code (QR code) or alternatively a bar code or other graphical image, by the QR code generator 50. The QR code generator 50 may be a software module part of the control software of the system 1, as illustrated in figure 3. In step 156, the QR code 157 is displayed on screen 4, and the user scans the QR code 170 with his smartphone 160 on which the mobile banking app is installed. After performing the necessary checks, the mobile banking app is activated as illustrated by an exchange of confirmation between the smartphone 160 and a banking server 38 (double arrow 162). As will be appreciated, the confirmation signal exchanged (double arrow 62) may be sent through the apparatus 1, or may be sent directly through the wireless data network to the banking server 38. Various different implementations of this step are possible. Moreover, step 162 is optional, and may be dispensed with if desired. In step 165, apparatus 1 optionally receives the confirmation from the banking server 138 (or directly from the smartphone 160) that the activation is performed successfully, after which the process is ended in step 168.

The present invention has been described in terms of some specific embodiments thereof. It will be appreciated that the embodiments shown in the drawings and described herein are intended for illustrated purposes only and are not by any manner or means intended to be restrictive on the invention. The context of the invention discussed here is merely restricted by the scope of the appended claims.

## Claims

1. Automatic teller system for providing at least one banking service to a user operating the system, the system comprising an identification assembly for identifying the user, a user interface assembly for interacting with the user, a data communication module for communicating with a banking server, and a control module,
wherein the control module is configured to cooperate with the identification assembly for identification of the user, and wherein the control module is configured to cooperate with the data communication module and with the user interface assembly such as to, dependent on a result of the identification, exchange data with the user and with the banking server for providing the banking service to the user,
wherein the identification assembly comprises an identity certificate scanner for receiving picture bearing identity certificate, wherein the identity certificate scanner is configured to authenticate the picture bearing identity certificate and to scan at least a picture included thereon, and wherein the identification assembly further comprises a camera for obtaining an image of the user, and wherein the control module is configured to compare the image with the picture to identify the user by the picture.

2. System according to claim 1, wherein the automatic teller system comprises smart card creator component for creating and issuing a personal banking card to the user dependent on said data exchange.

3. System according to claim 1 or 2, wherein the control module is configured to perform the comparing of the image with the picture either continuously, or one or more of times during said providing of the banking service, and to terminate or cancel the providing of the banking service upon detecting that a positive identification of the user by said comparing is no longer possible.

4. System according to any of the previous claims, wherein the identity certificate scanner further comprises a data capture module for capturing user data from the picture bearing identity certificate, and wherein the control module is configured to cooperate with the data capture module to receive the captured user data for exchanging the user data with the banking server for providing the banking service.

5. System according to claim 4, wherein the data capture module comprises at least one of: a chip reader for obtaining data stored in a chip included by the picture bearing identity certificate, a character recognition module, or an optical code reader such as a bar code reader or a quick response - QR - code reader.

6. System according to any of the claims 4 or 5, wherein the smart card creator component is configured to receive at least part of the captured user data, and wherein the smart card creator component comprises at least one of: a card printer for printing said at least part of the captured user data on the personal banking card, or a card encoder for storing the at least part of the captured user data on a chip included by the personal banking card.

7. System according to any of the previous claims, wherein the control module is arranged for receiving from the banking server through the data communication module a service delivery proposal to be accepted or rejected by the user, and wherein the control module is configured to cooperate with the user interface assembly for receiving user input for accepting or rejecting the service delivery proposal, wherein the user interface assembly comprises at least one of a signature pad, a touch screen or a touch pad for capturing a signature from the user.

8. System according to any of the previous claims, wherein the user interface assembly further comprises a display screen, and wherein the control module is configured to generate and display a unique identifier pattern, such as a quick response - QR - code or bar code, on the display screen dependent on said identification.

9. System according to claim 8, wherein the data communication module further comprises a wireless communication module, and wherein the control module upon is further arranged to receive an electronic confirmation from a mobile communication device of the user in response to the displaying of the unique identifier pattern on the display screen.

10. System according to any of the previous claims, wherein the data communication module is further configured to establish a streaming data connection to a service center server, wherein the control module is arranged for instructing the identification module to provide streaming data representing an audiovisual signal of the user to the service center server, and wherein the control module is arranged for instructing the display module to display an audiovisual stream received from the service center server.

11. Method of providing a banking service using an automatic teller system to a user operating the system, wherein the system comprises an identification assembly for identifying the user, a user interface assembly for interacting with the user, a data communication module for communicating with a banking server, and a control module, wherein the method comprises the steps of:
the control module cooperating with the identification assembly for identifying the user;
dependent on a result of the identification, the control module cooperating with the data communication module and with the user interface assembly for exchanging data with the user and with the banking server for providing the banking service to the user;
receiving a picture bearing identity certificate by an identity certificate scanner included by the identification assembly, authenticate the picture bearing identity certificate using the an identity certificate scanner, and scan at least a picture included on the picture bearing identity certificate;
using a camera included by the identification assembly for obtaining a live image of the user; and
compare the image with the picture using the control module to identify the user by the picture.

12. Method according to claim 11, further comprising creating and issuing a personal banking card to the user dependent on said exchanging of data by a smart card creator component of said automatic teller system.

13. Method according to claim 11 or 12, wherein the step of comparing is performed either once, or continuously, or a plurality of times during said providing of the banking service, and further including a step of terminating or cancelling said providing of the banking service upon detecting that a positive identification of the user by the step of comparing is no longer possible.

14. Method according to any of claims 11-13, further comprising a step of capturing user data from the picture bearing identity certificate using a data capture module included by the identity certificate scanner, and a step of the control module cooperating with the data capture module to receive the captured user data for exchanging the user data with the banking server for providing the banking service.

15. Method according to any of the claim 11-14, further comprising generating by the control module a unique identifier pattern, such as a quick response - QR - code or bar code, and displaying the unique identifier pattern on a display screen included by the user interface assembly dependent on said identification.

16. Computer program product comprising a computer executable code for performing a method in accordance with any of the claims 11-15 when executed on an automatic teller machine comprising an identification assembly for identifying the user, a user interface assembly for interacting with the user, a data communication module for communicating with a banking server, and a control module.
